(19)

Europäisches Patentamt
European Patent Office
Office européen des brevets

(11) **EP 2 039 739 A1**

(12) **EUROPEAN PATENT APPLICATION**

(43) Date of publication:
25.03.2009 Bulletin 2009/13

(51) Int Cl.:
*C10L 9/10* (2006.01)    *C10L 1/10* (2006.01)
*C10L 5/00* (2006.01)

(21) Application number: 08163571.6

(22) Date of filing: 03.09.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 17.09.2007 US 856205

(71) Applicant: Afton Chemical Corporation
Richmond, VA 23219 (US)

(72) Inventors:
• MacPherson, Ian
Richmond, VA 23238 (US)
• Quinn, Thomas G.
Hanover, VA 23069 (US)
• Meffert, Michael W.
Chesterfield, VA 23832 (US)

(74) Representative: Schwabe - Sandmair - Marx
Patentanwälte
Stuntzstrasse 16
81677 München (DE)

(54) **Environmentally-friendly additives and additive compositions for solid fuels**

(57)    Fuel additive packages and fuel compositions, suitable for use with solid fuels, having environmentally compatible characteristics as defined by European Council Directive 67/548/EEC is disclosed. Such additive packages and compositions may include components selected from non-persistent materials, non-bioaccumulative materials, and/or or non-toxic materials.

EP 2 039 739 A1

**Description**

**TECHNICAL FIELD**

The present disclosure relates to the field of fuel additives, fuels, and fuel compositions, specifically environmentally-friendly fuel additives and fuel additive compositions suitable for use with solid fuels.

**BACKGROUND**

As concern for the environment grows worldwide, the safety of the various chemical substances used in fuel compositions and fuel additive concentrates is becoming more of a concern for manufacturers and distributors. It is paramount for the industry to examine the use of functional fuel additive components that are also compatible with environmental regulations. In particular, substances that are persistent in the environment, bioaccumulative, and toxic may be banned from use. Hence, there exists a need for fuel additive compositions and fuel formulations containing such additive compositions that incorporate more environmentally acceptable materials.

**SUMMARY**

In some embodiments disclosed herein, an environmentally compatible fuel additive composition suitable for use with a solid fuel may comprise at least one functional component, wherein the component is selected from the group consisting of a non-persistent material, a non-bioaccumulative material, and a non-toxic material. In some embodiments, the additive composition may be substantially devoid of any component that is persistent, bioaccumulative, and toxic.

In another embodiment, an environmentally compatible solid fuel composition, may comprise a) a major amount of a solid fuel; and b) a minor amount of an additive composition. The additive composition may comprise at least one of a functional component, wherein the component comprises at least one of: i) an acceptable level biodegradation of at least one of: 1) a half-life in marine water of less than 60 days; 2) a half-life in fresh or estuarine water of less than 40 days; 3) a half-life in marine sediment of less than 180 days; 4) a half-life in fresh or estuarine water sediment less than 120 days; or 5) a half-life in soil less than 120 days, as determined by a biodegradation test; ii) a bioconcentration factor below 2000 in a bioconcentration factor test; or iii) is devoid of a toxic effect at an aqueous concentration below 0.01 mg/L on a toxicity test.

In another embodiment, a method of making an environmentally compatible solid fuel composition may comprise combining a major amount of a solid fuel and a minor amount of an additive composition. The additive composition may comprise at least one functional component wherein the component is selected from: i) a material having an acceptable level biodegradation of at least one of: 1) a half-life in marine water of less than 60 days; 2) a half-life in fresh or estuarine water of less than 40 days; 3) a half-life in marine sediment of less than 180 days; 4) a half-life in fresh or estuarine water sediment less than 120 days; or 5) a half-life in soil less than 120 days, as determined by a biodegradation test; ii) a material having a bioconcentration factor below 2000 in a bioconcentration factor test; or iii) a material that is devoid of a toxic effects at an aqueous concentration below 0.01 mg/L on a toxicity test. The solid fuel composition may comply with European Council Directive 67/548/EEC.

In another embodiment, an environmentally compatible solid fuel composition may comprise a major amount of a solid fuel and a minor amount of an additive composition. The additive composition may comprise at least one functional component, wherein the component is at least selected from the group consisting of non-persistent materials, non-bioaccumulative materials, and non-toxic materials, and the additive composition is substantially devoid of any component that is persistent, bioaccumulative, and toxic.

An advantage of embodiments of the disclosure is that an impact on the environment by the use of materials disclosed herein may be lessened. A further advantage is that accidental or inadvertent spills of the additive compositions and/or fuel compositions may not pose long term threats to humans and wildlife. Still further advantages of the compositions and methods described herein may be acceptable to national and state regulatory agencies.

As used herein, the terms "fuel composition," and "fuel" are considered synonymous, fully interchangeable terminology referring to the finished fuel product comprising a major amount of a solid fuel plus a minor amount of a fuel additive composition. "Solid fuel" herein can in one embodiment be selected from the group consisting of coal, coke, coke breeze, carbonaceous char, petroleum pitch, petroleum coke, refuse derived fuel (RDF), municipal solid waste (MSW), biomass, bagasse, wood, wood pellets, wood bark, wood by-products, wood wastes, sawdust, hog fuel, black liquor solids, waste tires, charcoal, peat, corn, corn cobs, wheat, rye, and other grains, coffee grounds, and tobacco wastes.

As used herein, the terms "additive package," "additive concentrate," and "additive composition" are considered synonymous, fully interchangeable terminology referring to the portion of the fuel composition excluding the solid fuel.

As used herein, a "functional" component means a component that is used in a fuel formulation to provide a measurable change in a characteristic or property of a fuel containing the component or in a property of the system delivering the fuel, or the system combusting the fuel, or the system exhausting the products from the combustion of the fuel.

As used herein, the terms "agent" and "additive" are considered synonymous, fully interchangeable terminology referring to any single component of a fuel composition excluding the major amount of solid fuel in the mixture.

As used herein, the term "substantially devoid" means containing no more than, for example, a trace amount, an innocuous amount, or a contaminant amount.

As used herein, the term "$NO_x$" refers to, for example, the chemical species nitric oxide (NO) and/or nitrogen dioxide ($NO_2$) which may be emitted from combustion sources. In some instances $NO_x$ may define dinitrogen monoxide ($N_2O$), dinitrogen trioxide ($N_2O_3$), dinitrogen tetroxide ($N_2O_4$), and/or dinitrogen pentoxide ($N_2O_5$).

Additional objects and advantages of the disclosure will be set forth in part in the description which follows, and/or can be learned by practice of the disclosure. The objects and advantages of the disclosure will be realized and attained by means of the elements and combinations particularly pointed out in the appended claims.

It is to be understood that both the foregoing general description and the following detailed description are exemplary and explanatory only and are not restrictive of the disclosure, as claimed.

## DESCRIPTION OF THE EXEMPLARY EMBODIMENTS

Exemplary embodiments of the disclosure will now be provided to illustrate limited aspects of the preferred embodiments thereof, including various examples and illustrations of the formulation and use of the disclosed embodiments. It will be understood that these embodiments are presented solely for the purpose of illustrating the embodiments and shall not be considered as a limitation upon the scope thereof.

European Council Directive 76/548/EEC, incorporated herein by reference, provides regulatory guidance for the registration and evaluation of chemical substances that may be exposed to the environment during the normal course of use. Guidelines and testing procedures are enumerated therein, so that the potential environmental impact of any substance may be quantified.

A number of diagnostic tests have been developed to measure the effects of certain chemical substances upon various aspects of the environment. In particular, three main parameters are used to classify such substances: namely, persistence, bioaccumulation, and toxicity.

## PERSISTENCE

The persistence of a substance in the environment may be inversely related to the biodegradability of the substance. Biodegradability is the ability of microbes occurring in an environment to break down a substance into simpler substances. The persistence, or biodegradability, criterion is defined in European Council Directive 76/548/EEC Annex XIII section 1.1, which is herein incorporated by reference, as a substance fulfilling one of the following criteria: having a half-life in marine water longer than 60 days, having a half-life in fresh or estuarine water longer than 40 days, having a half-life in marine sediment longer than 180 days, having a half-life in fresh or estuarine water sediment longer than 120 days, or having a half-life in soil longer than 120 days.

A material's persistence in the environment may be determined by a number of different test procedures, including the following tests: a dissolved organic carbon (DOC) die-away test, a modified OECD screening dissolved organic carbon die-away test, a carbon dioxide evolution test, a manometric respirometry test, a closed bottle test, a MITI test, a Zahn-Wellens test, an activated sludge simulation test, an activated sludge respiration inhibition test, and a modified SCAS test. The above test procedures are set forth in European Council Directive 76/548/EEC Annex V, sections C.4, C.9, C.10, C.11, and C.12, which are incorporated in full herein by reference, and are summarized below.

Six test methods are described that permit the screening of chemicals for ready biodegradability in an aerobic aqueous medium:

(a) Dissolved Organic Carbon (DOC) Die-Away (Method C.4-A)
(b) Modified OECD Screening - DOC Die-Away (Method C.4-B)
(c) Carbon dioxide ($CO_2$) Evolution (Method C.4-C)
(d) Manometric Respirometry (Method C.4-D)
(e) Closed Bottle (Method C.4-E)
(f) MITI (Ministry of International Trade and Industry - Japan) (Method C.4-F)

For example, a solution, or suspension, of the test substance in a mineral medium is introduced into an inoculum and incubated under aerobic conditions in the dark or in diffuse light. The amount of dissolved organic carbon (DOC) in the test solution due to microbial inoculum should be kept as low as possible compared to the amount of DOC due to the test substance. Allowance is made for the endogenous activity of the inoculum by running parallel blank tests with inoculum but without test substance, although the endogenous activity of cells in the presence of the substance will not exactly match that in the endogenous control. A reference substance is run in parallel to check the operation of the procedures.

In general, degradation is followed by the determination of parameters, such as DOC, $CO_2$ production, and oxygen uptake, and measurements are taken at sufficiently frequent intervals to allow the identification of the beginning and end of biodegradation. With automatic respirometers the measurement is continuous. DOC is sometimes measured in addition to another parameter but this is usually done only at the beginning and the end of the test. Specific chemical analysis may also be used to assess primary degradation of the test substance, and to determine the concentration of any intermediate substances formed (obligatory in the MITI test).

Normally, the tests last for 28 days. Tests however may be ended before 28 days, i.e., as soon as the biodegradation curve has reached a plateau for at least 3 determinations. Tests may also be prolonged beyond 28 days when the curve shows that biodegradation has started but that the plateau has not been reached by day 28.

The inoculum may be derived from a variety of sources: activated sludge, unchlorinated sewage effluents, surface waters and soils, or from a mixture of these.

## Dissolved Organic Carbon Die-Away Test and Modified OECD Screening Dissolved

### Organic Carbon Die-Away Test

In the dissolved organic carbon die-away test and the modified OECD screening dissolved organic carbon die-away test, a measured volume of inoculated mineral medium containing a known concentration of the test substance (10-40 mg DOC/l) as the nominal sole source of organic carbon is aerated in the dark or diffused light at 22 $\pm$ 2 °C. Degradation is followed by DOC analysis at frequent intervals over a 28-day period. The degree of biodegradation is calculated by expressing the concentration of DOC removed (corrected for that in the blank inoculum control) as a percentage of the concentration initially present. The degree af primary biodegradation may also be calculated from supplemental chemical analysis made at the beginning and end of incubation.

### Carbon Dioxide Evolution Test

In the carbon dioxide evolution test a measured volume of inoculated mineral medium containing a known concentration of the test chemical (10-20 mg DOC or total organic carbon (TOC) per liter) as the nominal sole source of organic carbon is aerated by the passage of carbon dioxide-free air at a controlled rate in the dark or in diffuse light. Degradation is followed over 28 days by determining the carbon dioxide produced, which is trapped in barium or sodium hydroxide and which is measured by titration of the residual hydroxide or as inorganic carbon. The amount of carbon dioxide produced from the test chemical (corrected for that derived from the blank inoculum) is expressed as a percentage of theoretical maximum carbon dioxide produced ($ThCO_2$). The degree of biodegradation may also be calculated from supplemental DOC analysis made at the beginning and end of incubation.

The percentage degradation may be calculated by:

$$\% \text{ degradation} = (\text{mg } CO_2 \text{ produced} \times 100) / (ThCO_2 \times \text{mg test chemical added})$$

### Manometric Respirometry Test

In the manometric respirometry test a measured volume of inoculated mineral medium, containing a known concentration of test chemical (100 mg/liter of the test substance, to give at least 50-100 mg theoretical oxygen demand/liter) as the nominal sole source of organic carbon, is stirred in a closed flask at a constant temperature ($\pm$ 1° C or closer) for up to 28 days. The consumption of oxygen may be determined either by measuring the quantity of oxygen (produced electrolytically) required to maintain constant gas volume in the respirometer flask, or from the change in volume or pressure (or a combination of the two) in the apparatus. Evolved carbon dioxide is absorbed in a solution of potassium hydroxide or another suitable absorbent. The amount of oxygen taken up by the test chemical (corrected for uptake by a blank inoculum, run in parallel) is expressed as a percentage ofThOD (theoretical oxygen demand) or COD (chemical oxygen demand). Optionally, primary biodegradation may also be calculated from supplemental specific analysis made at the beginning and end of incubation, and ultimate biodegradation by DOC analysis.

**Closed Bottle Test**

In the closed bottle test a solution of the test chemical in mineral medium, usually at 2-5 mg/liter, is inoculated with a relatively small number of micro-organisms from a mixed population and kept in completely full closed bottles in the dark at constant temperature. Degradation is followed by analysis of dissolved oxygen over a 28-day period. The amount of oxygen taken up by the test chemical, corrected for uptake by a blank inoculum run in parallel as a control, is expressed as a percentage of ThOD or COD.

**MITI Test**

In the MITI test, the oxygen uptake by a stirred solution, or suspension, of the test chemical in a mineral medium, inoculated with specially grown, unadapted micro-organisms, is measured automatically over a period of 28 days in a darkened, enclosed respirometer at 25 $\pm$ 1 °C. Evolved carbon dioxide is absorbed by soda lime. Biodegradability is expressed as the percentage oxygen uptake (corrected for blank uptake) of the theoretical oxygen uptake (ThOD). The percentage of primary biodegradability is also calculated from supplemental specific chemical analysis made at the beginning and end of incubation and, optionally, by DOC analysis.

**Zahn-Wellens Test**

The purpose of the Zahn-Wellens Test is the evaluation of the potential ultimate biodegradability of water-soluble, non-volatile organic substances when exposed to relatively high concentrations of micro-organisms in a static test. The substances to be studied are used in concentrations corresponding to DOC-values in the range of 50 to 400 mg/liter or COD-values in the range of 100 to 1000 mg/liter (DOC = dissolved organic carbon; COD = chemical oxygen demand). These relatively high concentrations have the advantage of analytical reliability. Compounds with toxic properties may delay or inhibit the degradation process. In this method, the measure of the concentration of dissolved organic carbon or the chemical oxygen demand is used to assess the ultimate biodegradability of the test substance. A simultaneous use of a specific analytical method may allow the assessment of the primary biodegradation of the substance (disappearance of the parent chemical structure). The method is applicable only to those organic test substances which, at the concentration used in the test are soluble in water under the test conditions, have negligible vapor pressure under the test conditions, are not inhibitory to bacteria, are adsorbed within the test system only to a limited extent, and are not lost by foaming from the test solution.

Activated sludge, mineral nutrients and the test material as the sole carbon source in an aqueous solution are placed together in a one to four liter glass vessel equipped with an agitator and an aerator. The mixture is agitated and aerated at 20 to 25 °C under diffuse illumination or in a dark room for up to 28 days. The degradation process is monitored by determination of the DOC (or COD) values in the filtered solution at daily or other appropriate regular time intervals. The ratio of eliminated DOC (or COD) after each interval to the value three hours after the start is expressed as percentage biodegradation and serves as the measure of the extent of degradation at this time. The result is plotted versus time to give the biodegradation curve.

**Activated Sludge Simulation Test**

The activated sludge simulation test is used to determine the primary biodegradability of a substance in an activated sludge plant model, at a concentration of about 20 mg/liter. This allows the assessment of the primary biodegradability of the substance (disappearance of the parent chemical structure). Another purpose of the method is the determination of ultimate biodegradability by the measurement of the removal of the substance and any metabolites in an activated sludge plant model at a concentration corresponding to > 12 mg DOC/liter (or approximately 40 mg COD/liter); wherein 20 mg DOC/liter seems to be optimal.

For the determination of ultimate biodegradability, two activated sludge pilot units are run in parallel. The test substance is added to the influent (synthetic or domestic sewage) of one of the units, while the other blank unit receives the sewage alone. For the determination of primary biodegradation with specific analysis in the influent and effluent, only one unit may be used.

The sludge growth/stabilization period is the period during which the concentration of the activated sludge suspended solids and the performance of the units' progress to a steady state under the operating conditions used.

The running-in period is the period which lasts from the time the test substance is first added to the time when its removal reaches a plateau (relatively constant value). This period must not exceed six weeks.

The evaluation period is a three week period, i.e., three weeks from the time that the removal of the test substance reaches a relatively constant, and usually high, value. For those substances which show little or no degradation in the first six weeks, the evaluation period is taken as the following three weeks.

Influent without substance to be tested must pass through an aeration vessel either at the rate of one liter per hour or a rate of one-half liter per hour thereby providing a mean retention time of either three or six hours. The rate of aeration should be regulated so that the content of the vessel is kept constantly in suspension while the dissolved oxygen content is at least 2 mg/liter.

The sludge which has accumulated around the top of the aeration vessel must be returned to the mixed liquor at least once each day by brushing or some other appropriate means.

The effluent is collected in a second vessel for 20 to 24 hours, and a sample is taken after thorough mixing.

In order to monitor and control the efficiency of the process, the chemical oxygen demand (COD) or the dissolved organic carbon (DOC) of the filtrate of the accumulated effluent is measured at least twice weekly, as well as that of the filtered influent (using a membrane of pore size 0.45 $\square$m, wherein the first 20 ml (approximately) of the filtrate are discarded). The reduction in COD or DOC should level off when a roughly regular daily degradation is obtained.

The operating conditions of the running-in period are maintained and sufficient stock solution (approximately 1%) of the test material is added to the influent of the test unit so that the desired concentration of test material (approximately 10 to 20 mg DOC/liter or 40 mg COD/liter) in the sewage is obtained. This may be done by mixing the stock solution to the sewage daily or by means of a separate pumping system. This concentration may be reached progressively. If there are no toxic effects of the test substance on the activated sludge, higher concentrations may also be tested.

The blank unit is fed only with influent without added substances. Adequate volumes of the effluents are taken for analysis and filtered through membrane filters (0.45 $\square$m), the first 20 ml (approximately) of filtrate being discarded.

The filtered samples have to be analyzed on the same day, otherwise they must be preserved by any suitable method, for example, by using 0.05 ml of a 1% mercuric chloride ($HgCl_2$) solution for each 10 ml of filtrate or by storing them at 2 to 4 °C up to 24 hours, or below -18 °C for longer periods.

The running-in time, with addition of test substance, should not exceed six weeks and the evaluation period should not be shorter than three weeks, so that about 14 to 20 determinations are available for calculation of the final result.

## Activated Sludge Respiration Inhibition Test

The activated sludge respiration inhibition test assesses the effect of a test substance on micro-organisms by measuring the respiration rate under defined conditions in the presence of different concentrations of the test substance. The purpose of this method is to provide a rapid screening method whereby substances which may adversely affect aerobic microbial treatment may be identified, and to indicate suitable non-inhibitory concentrations of test substances to be used in biodegradability tests. Two controls without the test substance are included in the test design, one at the start and the other at the end of the test series. Each batch of activated sludge should also be checked using a reference substance.

The activated sludge respiration inhibition method is most readily applied to substances which, due to their water solubility and low volatility, are likely to remain in water. For substances with limited solubility in the test media, it may not be possible to determine the $EC_{50}$. Results based on oxygen uptake may lead to erroneous conclusions if the test substance has the propensity to uncouple oxidative phosphorylation. It may be useful to have the following information to perform the test: water solubility, vapor pressure, structural formula, and the purity of the test substance.

It is recommended that 3,5-dichlorophenol, as a known inhibitor of respiration, be used as a reference substance and tested for $EC_{50}$ on each batch of activated sludge as a means of checking that the sensitivity of the sludge is not abnormal.

At least five concentrations, spaced by a constant factor preferably not exceeding 3.2, are used. At time '0', 16 ml of the synthetic sewage feed are made up to 300 ml with water. 200 ml of microbial inoculum are added and the total mixture (500 ml) poured into a first vessel (first control CI). The test vessels should be aerated continuously so as to ensure that the dissolved $O_2$ does not fall below 2.5 mg/liter and that, immediately before the measurement of the respiration rate, the $O_2$ concentration is about 6.5 mg/liter.

At time '15 minutes' (15 minutes is an arbitrary, but convenient, interval) the above is repeated, except that 100 ml of the test substance stock solution are added to the 16 ml of synthetic sewage before adding water to 300 ml and microbial inoculum to make a volume of 500 ml. This mixture is then poured into a second vessel and aerated as above. This process is repeated at 15-minute intervals with different volumes of the test substance stock solution to give a series of vessels containing different concentrations of the test substance.

Finally, a second control is prepared (C2). After three hours the pH is recorded, and a well-mixed sample of the contents of the first vessel is poured into the measuring apparatus and the respiration rate is measured over a period of up to 10 minutes. This determination is repeated on the contents of each vessel at 15-minute intervals, in such a way that the contact time in each vessel is three hours. The reference substance may be tested on each batch of microbial inoculum in the same way.

**Modified SCAS Test**

The modified SCAS test is used to evaluate the potential ultimate biodegradability of water-soluble, non-volatile organic substances when exposed to relatively high concentrations of micro-organisms over a long time period. The viability of the microorganisms is maintained over this period by daily addition of a settled sewage feed.

The conditions provided by the test are highly favorable to the selection and/or adaptation of microorganisms capable of degrading the test compound, however the procedure may also be used to produce acclimatized inocula for use in other tests.

According to the method, the measure of the concentration of dissolved organic carbon is used to assess the ultimate biodegradability of the test substances. It is preferable to determine DOC after acidification and purging rather than as the difference of $C_{total} - C_{inorganic}$.

The method is applicable only to those organic test substances which, at the concentration used in the test are soluble in water (at least 20 mg dissolved organic carbon/liter), have negligible vapor pressure, are not inhibitory to bacteria, do not significantly adsorb within the test system, and are not lost by foaming from the test solution. The organic carbon content of the test substance must be established prior to running the test.

Activated sludge from a sewage treatment plant is placed in a semi-continuous activated sludge (SCAS) unit. The test compound and settled domestic sewage are added, and the mixture is aerated for 23 hours. The aeration is then stopped, the sludge allowed to settle, and the supernatant liquor is removed. The sludge remaining in the aeration chamber is then mixed with a further aliquot of test compound and sewage and the cycle is repeated.

Biodegradation is established by determining the dissolved organic carbon content of the supernatant liquor. This value is compared with that found for the liquor obtained from a control tube dosed with settled sewage only.

Ideally, the dissolved organic carbon in the supernatant liquors is determined daily, although less frequent analyses may be used. Before analysis the liquors are filtered through washed 0.45 $\mu$m membrane filters or centrifuged. Membrane filters are suitable if it is assured that they neither release carbon nor absorb the substance in the filtration step. The temperature of the sample must not exceed 40 °C while it is in the centrifuge. The length of the test for compounds showing little or no biodegradation is indeterminate, but experience suggests that this should be at least 12 weeks in general, but not longer than 26 weeks.

**BIOACCUMULATION**

Bioaccumulation, or bioconcentration, is defined as the increase in concentration of a test substance in or on an organism or specified tissues thereof relative to the concentration of the test substance in the surrounding medium. As used herein, the terms "bioaccumulation" and "bioconcentration" are used interchangeably to refer to the same criteria. The bioconcentration factor ("BCF") is calculated as the concentration of test substance in an organism (or specified tissues thereof) divided by the concentration of the substance in the surrounding medium. Both the uptake and depuration of substances by organisms, and the respective rates thereof, are considered in calculating bioaccumulation.

One predictive factor for bioaccumulation may be a substance's octanol-water partition coefficient (Pow). The Pow is a substance's solubility in n-octanol and water at equilibrium. The logarithm of Pow may be an indication of a substance's potential for bioaccumulation in aquatic organisms.

The criterion for acceptable bioaccumulation is defined in European Council Directive 76/548/EEC Annex XIII section 1.2, which is herein incorporated by reference, as a substance having a bioconcentration factor higher than 2000. The bioconcentration factor of a material may be determined by test procedures set forth in European Council Directive 76/548/EEC Annex V, section C.13 flow-through fish test, which is incorporated in full herein by reference.

**Flow-Through Fish Test**

The flow-through fish test consists of two phases: the exposure (uptake) phase and the post-exposure (depuration) phase. During the uptake phase, separate groups of fish of one species are exposed to at least two concentrations of the test substance. They are then transferred to a medium free of the test substance for the depuration phase. A depuration phase is always necessary unless uptake of the substance during the uptake phase has been insignificant (e.g., the BCF is less than 10). The concentration of the test substance in/on the fish (or specified tissue thereof) is followed through both phases of the test. In addition to the two test concentrations, a control group of fish is held under identical conditions except for the absence of the test substance, to relate possible adverse effects observed in the bioconcentration test to a matching control group and to obtain background concentrations of test substance.

The uptake phase is run for 28 days unless it is demonstrated that equilibrium has been reached earlier. The depuration period is then begun by transferring the fish to the same medium but without the test substance in another clean vessel. Where possible the bioconcentration factor is calculated preferably both as the ratio ($BCF_{ss}$) of concentration

of the fish ($C_r$) and in the water ($C_w$) at apparent steady-state and as a kinetic bioconcentration factor, $BCF_K$ as the ratio af the rate constants of uptake ($k_1$) and depuration ($k_2$) assuming first-order kinetics.

If a steady-state is not achieved within 28 days, the uptake phase should be extended until steady-state is reached, or 60 days, whichever comes first; the depuration phase is then begun.

The BCF is expressed as a function of the total wet weight of the fish. However, for special purposes, specified tissues or organs (e.g. muscle, liver), may be used if the fish are sufficiently large or the fish may be divided into edible (fillet) and non-edible (viscera) fractions. Since, for many organic substances, there is a clear relationship between the potential for bioconcentration and lipophilicity, there is also a corresponding relationship between the lipid content of the test fish and the observed bioconcentration of such substances. Thus, to reduce this source of variability in test results for those substances with high lipophilicity (i.e. with log $P_{OW}$>3), bioconcentration should be expressed in relation to lipid content in addition to whole body weight.

The lipid content is determined on the same biological material as is used to determine the concentration of the test substance, when feasible.

## TOXICITY

The toxicity criterion is defined in European Council Directive 76/548/EEC Annex XIII section 1.3, which is herein incorporated by reference, as a substance having a long-term no-observed effect concentration (NOEC) for marine or freshwater organisms less than 0.01mg/L. Substances that are classified as carcinogenic, mutagenic, or toxic for reproduction may also be considered as toxic.

The toxicity of a material may be determined by test procedures, such as the acute toxicity for fish test, the acute toxicity for *Daphnia* test, and the algal inhibition test, set forth in European Council Directive 76/548/EEC Annex V, sections C.1, C.2, and C.3, which are incorporated in full herein by reference. These acute tests may be used for first cut screening (if LC50<1ppm), however chronic toxicity tests (usually in Daphnia but also other organisms) may be used for definitive Toxicity.

### Acute Toxicity For Fish Test

The purpose of the acute toxicity for fish test is to determine the acute lethal toxicity of a substance to fish in fresh water. It is desirable to have, as far as possible, information on the water solubility, vapor pressure, chemical stability, dissociation constants, and biodegradability of the substance to help in the selection of the most appropriate test method (static, serni-static, or flow-through) for ensuring satisfactorily constant concentrations of the test substance over the period of the test.

Additional information (for instance structural formula, degree of purity, nature and percentage of significant impurities, presence and amounts of additives, and n-octanol/water partition coefficient) should be taken into consideration in both the planning of the test and interpretation of the results.

Acute toxicity is the discernible adverse effect induced in an organism within a short time (days) of exposure to a substance. In the present test, acute toxicity is expressed as the median lethal concentration ($LC_{50}$), the concentration in water which kills 50% of a test batch of fish within a continuous period of exposure which must be stated.

Three types of procedure may be used. The static test is a toxicity test in which no flow of test solution occurs. The solutions remain unchanged throughout the duration of the test. The semi-static test is a test without flow of test solution, but with regular batchwise renewal of test solutions after prolonged periods (e.g. 24 hours). The flow-through test is a toxicity test in which the water is renewed constantly in the test chambers, the chemical under test being transported with the water used to renew the test medium.

At least 7 fish per concentration being tested are exposed to the substance for a duration of 96 hours in tanks of suitable capacity. At least five concentrations differing by a constant factor not exceeding 2.2, and as far as possible spanning the range of 0 to 100 % mortality, should be tested for each substance. The fish may not be fed during the test. The fish are inspected after the first 2 to 4 hours and afterward at least at 24-hour intervals. Fish are considered dead if touching of the caudal peduncle produces no reaction, and no breathing movements are visible. Dead fish are removed when observed and mortalities are recorded. Records are kept of visible abnormalities (e.g. loss of equilibrium, changes in swimming behavior, respiratory function, pigmentation, etc.). Measurements of pH, dissolved oxygen and temperature must be carried out daily.

### Acute Toxicity For *Daphnia* Test

The acute toxicity for *Daphnia* test is similar to the acute toxicity for fish test, but the purpose is to determine the median effective concentration for immobilization ($EC_{50}$) of a substance to *Daphnia* in fresh water. As with the toxicity for fish test, it is desirable to have, as far as possible, information on the water solubility, vapor pressure, chemical stability, dissociation constants, and biodegradability of the test substance before starting the test. Additional information (for instance structural formula, degree of purity, nature and percentage of significant impurities, presence and amount of additives, and n-octanol/water partition coefficient) should be taken into consideration in both the planning of the test and interpretation of the results.

The *Daphnia* are exposed to the test substance added to water at a range of concentrations for 48 hours. Under otherwise identical test conditions, and an adequate range of test substance concentrations, different concentrations of a test substance exert different average degrees of effect on the swimming ability of *Daphnia.* Different concentrations result in different percentages of *Daphnia* being no longer capable of swimming at the end of the test. The concentrations causing zero or 100% immobilization are derived directly from, the test observations whereas the 48-hour $EC_{50}$ may be determined by calculation if possible. A static system is used for this method, hence test solutions are not renewed during the exposure period.

Stock solutions of the required strength are prepared by dissolving the substance in deionized water or water. The chosen test concentrations are prepared by dilution of the stock solution. If high concentrations are tested, the substance may be dissolved in the dilution water directly.

The substances are normally only tested up to the limit of solubility. For some substances (e. g. substances having low solubility in water, or high $P_{OW}$, or those forming stable dispersion rather than true solution in water), it is acceptable to run a test concentration above the solubility limit of the substance to ensure that the maximum soluble/ stable concentration has been obtained. It is important, however, that this concentration will not otherwise disturb the test system (e. g. film of the substance on the water surface preventing the oxygenation of the water, etc.).

*Daphnia magna* is the preferred test species although *Daphnia pulex* is also permitted. The test animals shall be less than 24 hours old at the beginning of the test, laboratory bred, free from overt disease, and with a known history (e.g. breeding, any pretreatments, etc.).

The *Daphnia* are exposed to the substance for 48 hours. At least 20 animals at each test concentration, preferably divided into four batches of five animals each or two batches of 10, are required. At least 2 ml of test solutions should be provided for each animal. The test solution should be prepared immediately before introduction of the *Daphnia*, preferably without using any solvent other than water. The concentrations are made up in a geometric series, at a concentration ratio not exceeding 2.2. Concentrations sufficient to give 0 and 100% immobilization after 48 hours and a range of intermediate degrees of immobilizations permitting calculation of the 48 hour EC50 should be tested together with controls. The test temperature should be between 18 and 22°C, but for each single test it should be constant within ± 1°C. The test solutions must not be bubble-aerated, and the animals may not be fed during the test. The pH and the oxygen concentration of the controls and of all the test concentrations should be measured at the end of the test; the pH of the test solutions should not be modified. Volatile compounds should be tested in completely filled closed containers, large enough to prevent lack of oxygen. The *Daphnia* are inspected at least after 24 hours exposure and again after 48 hours.

For each period where observations were recorded (24 and 48 h), the percentage mortality is plotted against concentration on logarithmic-probability paper. In those cases where the slope of the concentration/percentage response curve is too steep to permit calculation of the $EC_{50}$, a graphical estimate of this value is sufficient. When two immediately consecutive concentrations at a ratio of 2.2 give only 0 and 100% immobilization these two values are sufficient to indicate the range within which the $EC_{50}$ falls.

**Algal Inhibition Test**

The algal inhibition test may be used to determine the effects of a substance on the growth of a unicellular green algal species. Relatively brief (72 hours) tests may assess effects over several generations. This method may be adapted for use with several different unicellular algal species. The method is most easily applied to water-soluble substances which, under the conditions of the test, are likely to remain in the water.

Exponentially-growing cultures of selected green algae are exposed to various concentrations of the test substance over several generations under defined conditions. The test solutions are incubated for a period of 72 hours, during which the cell density in each solution is measured at least every 24 hours. The inhibition of growth in relation to a control culture is determined.

Test cultures containing the desired concentrations of test substance and the desired quantity of algal inoculum are prepared by adding aliquots of stock solutions of the test substance to suitable amounts of pre-prepared algal cultures.

The culture flasks are shaken and placed in the culturing apparatus. The algal cells are kept in suspension by shaking, stirring, or bubbling with air, in order to improve gas exchange and reduce pH variation in the test solutions. The cultures are maintained at a temperature in the range of 21 to 25 °C, controlled at ± 2 °C.

The cell density in each flask is determined at least at 24, 48 and 72 hours after the start of the test. Filtered algal medium containing the appropriate concentration of the test chemical is used to determine the background when using cell density measurements other than direct counting methods.

A suitable fuel or fuel additive composition, according to one embodiment of the present disclosure, may use functional components that may not exhibit at least one of persistence, bioaccumulation, or toxicity when tested according to the procedures set forth above. Accordingly, a functional component that is found to be persistent, bioaccumulative, and toxic may not be included in fuel formulations of the present disclosure.

In another embodiment, a functional component may be non-persistent but may be bioaccumulative and toxic. In another embodiment, a functional component may be non-bioaccumulative but may be persistent and toxic. In another embodiment, a functional component may be non-toxic but may be persistent and bioaccumulative.

In another embodiment, a functional component may be non-persistent and non-bioaccumulative but may be toxic. In another embodiment, a functional component may be non-persistent and non-toxic but may be bioaccumulative. In another embodiment, a functional component may be non-bioaccumulative and non-toxic but may be persistent.

In another embodiment, a functional component may be non-persistent, non-bioaccumulative, and non-toxic.

Suitable embodiments may comprise additive compositions containing one or more of the following: acid plume reducing agents, anti-icing agents, biocides, carrier fluids, combustion improvers, corrosion inhibitors, diluents, dust suppressants, electrostatic precipitator activating agents, fluxing agents, fouling modifiers, hygroscopic agents, ignition improvers, markers or customer-specific "tags," reodorants, mercury scavengers, nitrogen oxide ($NO_x$) scavengers, $NO_x$ reducing agents, slag modifiers, sulfur oxide ($SO_2/SO_3$) scavengers, and surfactants.

Suitable embodiments may comprise one or more of methyl cyclopentadienyl manganese tricarbonyl, cyclopentadienyl manganese tricarbonyl, octane enhancer materials, alkyl nitrates, glycols, phenates, salicylates, sulfonates, alkali detergents and alkaline earth metal-containing detergents, tall oil fatty acids, 2-ethyl hexyl nitrate, manganese carboxylates, copper carboxylates, magnesium carboxylates, magnesium sulfonates, ferrocene, calcium nitrate, perlite, aluminum trihydrate, copper oxychloride, cerium oxides, hydroxides, and carboxylates, platinum group metal organics and inorganics, aluminum silicate, magnesium silicate, vermiculite, aluminum sulfonate, aluminum carboxylate, magnesium oxide, and magnesium hydroxide.

Suitable embodiments may comprise additive compositions comprising one or more metal compounds. The presence of metal atoms may be useful for realizing many desired additive functions, including combustion improvement, slag modification, acid neutralization, and many others. The metal compounds or metal ions may be inorganic metal compounds and/or organometallic compounds. The elemental or ionic metals may be selected from, but not limited to, one or more of the following: sodium, potassium, magnesium, calcium, barium, strontium, titanium, cerium, chromium, molybdenum, manganese, iron, zinc, yttrium, lanthanum, zirconium, ruthenium, tungsten, rhenium, osmium, iridium, boron, aluminum, silicon, tin, rubidium, cobalt, rhodium, nickel, palladium, platinum, copper, and silver compounds, and mixtures thereof. The inorganic metal compound may be selected from, but not limited to, one or more of the following: fluorides, chlorides, bromides, iodides, oxides, nitrates, sulfates, phosphates, carbonates, hydrides, nitrides, and mixtures thereof. The organometallic compounds may be selected from, but not limited to, one or more of: alcohols, aldehydes, ketones, esters, anhydrides, sulfonates, phosphonates, chelates, phenates, crown ethers, carboxylic acids, amides, and mixtures thereof. Also suitable are organometallic compounds containing one or more carbonyl groups, ethers or poly ethers, aminos, alkylaminos, acetamidos, alkoxides, alkyls, cyanos, furfuryls, carboxylates, acetylacetonates, and other organic ligands able to coordinate with or bond with a metal, metal compound, or metal ion.

An exemplary solid fuel composition containing functional components, wherein each component is selected from non-persistent, non-bioaccumulative, and non-toxic materials is illustrated in the following table.

**Table 1 - Fuel Additives**

| Component | Example 1 (Wt. % based on finished fuel) | Example 2 (Wt. % based on finished fuel) |
|---|---|---|
| manganese carboxylate | 0.00001 - 0.5 | 0.0001-0.1 |
| magnesium sulfonate | 0.00001 - 2.0 | 0.0001 - 0.01 |
| surfactant | 0.00001 - 1.0 | 0.0001 - 1.0 |
| aromatic solvent | 0-10.0 | 0.0001 - 10.0 |
| petroleum coke | Balance | Balance |

The conventional additives indicated in Table I may be combined with one or more solid fuels. Suitable fuels may comprise any known solid fuel or mixtures thereof. Suitable solid fuels may include, but are not limited to, coal, coke, coke breeze, carbonaceous char, petroleum pitch, petroleum coke, refuse derived fuel (RDF), municipal solid waste (MSW), biomass, bagasse, wood, wood pellets, wood bark, wood by-products, wood wastes, sawdust, hog fuel, black liquor solids, waste tires, charcoal, peat, corn, corn cobs, wheat, rye, and other grains, coffee grounds, tobacco wastes, and the like. This additive may also be water based by substituting an aqueous medium for the organic solvent, and adjusting the surfactant to meet the handling goals, for example, utilizing a clear solution, an emulsion, or a slurry.

Suitable solid fuels may be combined with one or more liquid fuels and/or water as an adjuvant, process aid, ignition promoter, dust suppressant, diluent, viscosity modifier, and/or flow enhancer. Such liquid fuels may comprise, but are not limited to, one or more of gasoline, diesel fuel, middle distillate fuel, biodiesel fuel, an alcohol, such as but not limited to an ethanol, bioethanol, a biobutanol, coal, an aviation fuel, jet fuel, marine fuel, burner fuel, home heating oil, a gas-to-liquid (GTL) base oil, a Group I base oil, a Group II base oil, a Group III base oil, a Group IV base oil, an ester, a vegetable oil, and a mixture thereof.

Coal

Suitable coal may comprise any naturally occurring coal. For example, coal may comprise lignite, jet, sub-bituminous, bituminous, and anthracite. Coal may be pulverized and/or crushed. Further, it may be fed into a burner as a dry powder or slurry.

Suitable coal may be coal that is converted into liquid-fuels like gasoline or diesel by several different processes. For example, the Fischer-Tropsch process of indirect synthesis of liquid hydrocarbons may be used to gasify coal to make syngas (a balanced purified mixture of CO and $H_2$ gas). The syngas may then be reductively polymerized on Fischer-Tropsch catalysts to make hydrocarbons which are further processed into gasoline, diesel, jet fuel, oxygenantes, lubricant base stocks, waxes, and other chemicals. Syngas can also be converted to methanol and ethanol, which can be used as a fuel, fuel additive, or further processed into gasoline. Several other processes exist to liquefy coal, such as, but not limited to direct liquefaction by hydrogenation and low temperature carbonization.

Suitable coal sources for liquefaction may comprise lignite, anthracite, sub-bituminous, and/or bituminous coal. The coal may be "pulverized coal" which is either already small enough or has been subjected to mechanical particle size reduction such that the resulting "pulverized" material can be conveyed via fluidization with air through a pipe into the combustion chamber of a furnace or boiler. The pulverized coal useful herein may be at least 50% under 200 mesh (74 microns), or as another example the coal useful herein is at least 60% under 200 mesh, or as an even further example, at least 70% under 200 mesh.

Biomass

Suitable biomass fuels may include living and/or dead biological material. Suitable biomass fuel sources may include, but are not limited to, plant matter, biodegradable wastes, municipal wastes, and industrial wastes. Biomass may be grown from several plants, including miscanthus, switchgrass, hemp, corn, poplar, willow, and sugarcane.

Petroleum Coke

Suitable petroleum coke (or pet coke) may comprise a carbonization product (such as a carbonaceous solid) of high-boiling hydrocarbon fractions (heavy residues) obtained in petroleum processing (such as those derived from oil refinery coker units or other cracking processes). Further, petroleum coke may include products such as green (or raw), calcined, or needle petroleum coke.

Carrier Fluids/Solvents

In some embodiments, the additives or additive package may be used with a liquid carrier or induction aid. Suitable carrier fluids may include any base oil as defined herein. Suitable solvents may comprise low aromatic Group I and/or Group II basestocks with a cSt of 4 at 100°C. Examples of solvents include 1) GP II 100SN, 98 VI at about 4.0 cSt at 100 °C from Motiva and b) GP I 150SN, 88 VI with 4.5 cSt at 100°C from ExxonMobil. Further suitable carrier fluids can be of various types, such as for example liquid poly-alpha-olefin oligomers, mineral oils, liquid poly(oxyalkylene) compounds, liquid alcohols or polyols, polyalkenes, liquid esters, and similar liquid carriers.- Further, a suitable carrier fluid may comprise water. Mixtures of two or more such carriers can be employed.

Liquid carriers can include butane not limited to 1) a mineral oil or a blend of mineral oils that have a viscosity index of less than about 120,2) one or more poly-alpha-olefin oligomers, 3) one or more poly(oxyalkylene) compounds having an average molecular weight in the range of about 500 to about 3000, 4) polyalkenes, 5) polyalkyl-substituted hydroxyaromatic compounds or 6) mixtures thereof. The mineral oil carriers that can be used include paraffinic, naphthenic, and asphaltic oils, and can be derived from various petroleum crude oils and processed in any suitable manner. For example, the mineral oils may be solvent extracted or hydrotreated oils. Reclaimed mineral oils can also be used. Hydrotreated oils may also be used.

Combustion Improvers

Suitable combustion improvers may comprise one or more of a manganese compound, an iron compound (including, for example, ferrocene), platinum-group metals, calcium, cerium, cerium oxide, copper, and the like. Examples of suitable combustion improvers include manganese carboxylate and ferrocene. For example, a non-limiting example of a useful manganese compound is an alkyloycloalkyldienyl manganese tricarbonyl, such as methylcyclopentadienyl manganese tricarbonyl. It generally is added in treat rates of about 0.001 gram to about 1.0 gram of manganese per kilogram of fuel.

Cyclopentadienyl manganese tricarbonyl compounds such as methylcyclopentadienyl manganese tricarbonyl are suitable combustion improvers because of their outstanding ability to reduce tailpipe emissions such as $NO_x$ and smog forming precursors and to significantly improve the octane quality of gasolines, both of the conventional variety and of the "reformulated" types

Suitable combustion improvers may be derived from a metal-containing compound. Metal-containing compounds or metal ions may be inorganic metal compounds and/or organometallic compounds. The elemental or ionic metals can be one or more of the following group: sodium, potassium, magnesium, calcium, barium, strontium, titanium, cerium, chromium, molybdenum, manganese, iron, rubidium, cobalt, rhodium, nickel, palladium, platinum, copper, and silver compounds, and mixtures thereof. The inorganic metal compound can be selected from the group consisting of fluorides, chlorides, bromides, iodides, oxides, nitrates, sulfates, phosphates, carbonates, hydrides, nitrides, and mixtures thereof. The organometallic compound can be selected from the group consisting of alcohols, aldehydes, ketones, esters, anhydrides, sulfonates, phosphonates, chelates, phenates, crown ethers, carboxylic acids, amides, and mixtures thereof. Particularly useful are organometallic compounds containing one or more carbonyl groups, ethers or poly ethers, and other organic ligands able to coordinate with or bond with a metal, metal compound, or metal ion.

Combustion additives may comprise a metal-containing catalyst. The additive may further comprise a ligand for complexing with the catalyst, and a solvent for carrying the catalyst/ligand complex. The catalyst may be comprised of one or more metals, such as, but not limited to, manganese, calcium, magnesium, potassium, zinc, and/or aluminum. The ligand may comprise one or more of, but not limited to, fossil fuel derived carboxylates, natural product carboxylates, genetically engineered natural products derived carboxylates, synthetic carboxylates, and/or mixtures thereof.

Single metals may be derivatized to be used as combustion catalysts, such as, but not limited to Ca, Cr, Mn, Fe, Co, Cu, Sr, Y, Ru, Rh, Pd, La, Re, Os, Ir, Pt, and Ce. The respective carboxylates can be made from the appropriate metal starting material (oxide, hydroxide, etc.) and carboxylic acid and a solvent.

Multimetallies may also be used. When using multimetallics, a co-catalyst may be used such as, for example, a magnesium carboxylate. In some instances, a second co-catalyst may be used such as, for example, one derived from the alkali metal group (Li, Na, K, etc.).

Slag Modifiers

Suitable slag modifiers may comprise one of more individual compounds of magnesium, copper, manganese, aluminum, silicon, and the like. Examples of suitable slag modifiers include magnesium sulfonate and copper oxychloride. Other suitable slag modifiers may comprise one or more multimetallic compounds or minerals. Examples of suitable multimetallic slag modifiers include vermiculite and perlite. Slag modifiers are generally added in treat rates of about 0.001 gram to about 100 grams of metal per kilogam of fuel. The specific treat rate can be dictated by the amount of ash present in the fuel and the physical and chemical properties, including chemical composition and melting temperature characteristics, of said ash.

A particularly suitable additive solution may comprise a combination of a combustion improver and a slag modifier. Many problems handling or otherwise managing slag accumulation and/or removal from the boiler are exacerbated by poor combustion that results in a high level of unburned carbon in the slag. The presence of a combustion improver in the additive formulation reduces the amount of unburned carbon in the slag, thereby increasing the effectiveness of the slag modifier additive chemistry.

Suitable slag modifiers may be derived from a metal-containing compound. The metal-containing compounds or metal ions may be inorganic metal compounds and/or organometallic compounds. The elemental or ionic metals can be one or more of the following group: magnesium, calcium, strontium, titanium, manganese, iron, aluminum, silicon, and copper compounds, and mixtures thereof. The inorganic metal compound can be selected from the group consisting of fluorides, chlorides, bromides, iodides, oxides, nitrates, sulfates, phosphates, carbonates, hydrides, nitrides, and mixtures thereof. The organometallic compound can be selected from the group consisting of alcohols, aldehydes, ketones, esters, anhydrides, sulfonate, phosphonates, chelates, phenates, crown ethers, carboxylic acids, amides, and mixtures thereof. Particularly useful are organometallic compounds containing one or more carbonyl groups, ethers or poly ethers, and other organic ligands able to coordinate with or bond with a metal, metal compound, or metal ion. Further, a suitable slag modifier may be derived from a multimetallic compound or mineral including vermiculite and perlite.

Fouling Modifiers

Suitable fouling modifiers may comprise one or more individual compounds of magnesium, copper, manganese, aluminum, and the like. Examples of such fouling modifiers include magnesium hydroxide and magnesium oxide. Other suitable fouling modifiers may comprise one or more multimetallic compounds or minerals. Examples of suitable multimetallic fouling modifiers include vermiculite and perlite. Fouling modifiers are generally added in treat rates of about 0.001 gram to about 100 grams of metal per kilogram of fuel. The specific treat rate can be dictated by the amount of ash present in the fuel and the chemical and physical properties, especially chemical composition and melting temperature characteristics, of said ash.

Suitable fouling modifiers may be derived from a metal-containing compound. The metal-containing compounds or metal ions may be inorganic metal compounds and/or organometallic compounds. The elemental or ionic metals can be one or more of the following group: magnesium, calcium, manganese, aluminum, copper compounds, and mixtures thereof. The inorganic metal compound can be selected from the group consisting of fluorides, chlorides, bromides, iodides, oxides, nitrates, sulfates, phosphates, carbonates, hydrides, nitrides, and mixtures thereof. The organometallic compound can be selected from the group consisting of alcohols, aldehydes, ketones, esters, anhydrides, sulfonates, phosphonates, chelates, phenates, crown ethers, carboxylic acids, amides, and mixtures thereof. Particularly useful are organometallic compounds containing one or more carbonyl groups, ethers or poly ethers, and other organic ligands able to coordinate with or bond with a metal, metal compound, or metal ion.

Fluxing Agents

Suitable fluxing agents may comprise one of more individual compounds of iron, sodium, potassium, and the like. One examples of a suitable fluxing agent is iron oxide.

Anti-Icing Agents

Various compounds known for anti-icing and/or freezing point depression may be utilized in the present embodiments. For example, suitable anti-icing agents may comprise ether polymers, glycols, and alcohols.

Hygroscopic Agents

Various compounds known for hygroscopic effects may be used in the present embodiments. Suitable hygroscopic agents may comprise, for example but not limited to, glycerin, glycerol, urea, ethanol, methanol, concentrated sulfuric acid, magnesium oxide, magnesium sulfate, magnesium sulfonate, calcium carbonate, calcium carbonate, calcium silicates, silica gel, activated alumina, various zeolites, montmorillonite clay, and concentrated sodium hydroxide (lye).

Corrosion Inhibitors

Suitable corrosion inhibitors may comprise one or more individual compounds of magnesium in particular. Examples of such corrosion inhibitors include magnesium hydroxide and magnesium oxide. Other suitable corrosion inhibitors may comprise one or more multimetallic compounds or minerals. Examples of suitable multimetallic corrosion inhibitors include vermiculite and perlite. Corrosion inhibitors are generally added in treat rates of about 0.001 gram to about 100 grams of metal per kilogram of fuel. The specific treat rate is dictated by the physical and chemical properties of the flue gas and flyash.

Other Additives

The additive compositions may comprise other suitable components such as a manganese-containing compound for the reduction of carbon present in fly ash resulting prom the combustion of coal. Further, additives for improving the performance and durability of electrostatic precipitators may be necessary in some embodiments. Suitable electrostatic precipitators may comprise sodium, lithium, potassium, manganese, and the like.

The additive composition may comprise other suitable components such as those described in US 2005-0257724 A1, herein incorporated by reference, for the additive-induced control of NOx emissions in a coal burning utility furnace. Such additive may comprise a metal-containing combustion catalyst that may include one or more of the following metals: manganese, potassium, calcium, strontium, chromium, iron, cobalt, copper, lanthanide, cerium, platinum, palladium, rhodium, ruthenium, iridium, and osmium. Suitable manganese tricarbonyl compounds which can be used include cyclopentadienyl manganese tricarbonyl, methylcyclopentadienyl manganese tricarbonyl, dimethylcyclopentadienyl manganese tricarbonyl, trimethylcyclopentadienyl manganese tricarbonyl, tetramethylcyclopentadienyl manganese tricarbonyl, pentamethylcyclopentadienyl manganese tricarbonyl, ethylcyclopentadienyl manganese tricarbonyl, diethylcyclopentadienyl manganese tricarbonyl, propylcyclopmtadienyl manganese tricarbonyl, isopropylcyclopentadienyl manganese tricarbonyl, tert-butylcyclopentadienyl manganese tricarbonyl, octylcyclopentadienyl manganese tricarbonyl, dodecylcyclopentadienyl manganese tricarbonyl, ethylmethylcyclopentadienyl manganese tricarbonyl, indenyl manganese tricarbonyl, and the like, including mixtures of two or more such compounds.

The additive composition may comprise other suitable components such as those described in US 11/743,707, herein incorporated by reference, for the removal of mercury-containing materials from emissions, such as flue gas, resulting from combustion devices.

The additive composition may comprise other suitable components such as those described in US 2004-0118032, herein incorporated by reference, for the reduction of inhibition of corrosion in an atmospheric burner unit. The additive components may comprise a fuel-borne organometallic combustion system containing manganese, or a manganese precursor source, or derivative. The system may further contain a catalyst package that may comprise one or more individual organometallic compounds of lithium, sodium, potassium, magnesium, calcium, strontium, barium, molybdenum, iron, cobalt, platinum, cerium, and combinations, mixtures, or precursors thereof.

The additive composition may comprise other suitable components such as those described in US 7,094,274, herein incorporated by reference, for the improved efficiency of and reduction of back-corona discharge on electrostatic precipitators. The additive components may comprise manganese or a manganese-containing compound or precursor. Examples of suitable manganese-containing compounds include, but are not limited to, methyl cyclopentadienyl manganese tricarbonyl, manganese sulfonate, manganese phenate, manganese salicylate, cyclopentadienyl manganese tricarbonyl, alkyl cyclopentadienyl manganese tricarbonyl, organic manganese tricarbonyl derivatives, alkyl cyclopentadienyl manganese derivatives, bis-cyclopentadienyl manganese, bis-alkyl cyclopentadienyl manganese, neutral and overbased manganese salicylates, neutral and overbased manganese phenates, neutral and overbased manganese sulfonates, manganese carboxylates, and combinations and mixtures thereof. Further, the additive composition may comprise oxygenates such as, but not limited to, methanol, ethanol, isopropanol, t-butanol, mixed alcohols, ethers such as methyl tertiary butyl ether, tertiary amyl methyl ether, ethyl tertiary butyl ether and mixed ethers; polyethers such as 2-methoxy ethyl ether (diglyme), triglyme; polyols; poyether alcohols such as di(ethylene glycol) monomethyl ether, and mixtures thereof.

Some of the additive components described above may be supplied in the form of solutions of active ingredient (s) in an inert diluent or solvent, such as a diluent oil. Unless expressly stated to the contrary, the amounts and concentrations of each additive component are expressed in terms of active additive, i.e., the amount of solvent or diluent that may be associated with such component as received is excluded.

It will be appreciated that the individual components employed may be separately blended into or combined with the fuel or carrier fluid or may be blended therein in various subcombinations, if desired. Ordinarily, the particular sequence of such blending steps is not crucial. Moreover, such components may be blended or combined in the form of separate solutions in a diluent. It may be preferable, however, to blend the additive components used in the form of a concentrate, as this simplifies the blending operations, reduces the likelihood of blending errors, and takes advantage of the compatibility and solubility characteristics afforded by the overall concentrate.

Additive concentrates may thus be formulated to contain all of the additive components and if desired, some of the base fuel component, in amounts proportioned to yield finished fuel blends consistent with the concentrations described above. In most cases, the additive concentrate will contain one or more diluents such as light carrier oils, to facilitate handling and blending of the concentrate. Thus concentrates containing up to about 50 wt. % of one or more diluents or solvents may be used, provided the solvents are not present in amounts that interfere with the low and high temperature and flash point characteristics and the performance of the finished additive formulation.

Such additive concentrates are suitably devoid of materials or components that are bioaccumulative, toxic, and/or persistent as indicated by the tests described above. Examples of such materials, include but are not limited to, certain alkanes, alkoxy alkylamines, alkyl methacrylates, alkyl phenols, alkylphenols, polyoxyalkyl alkylamines, aryl amines, aryl phosphites, branched alkyl phenols, branched alkyl polysulfides, branched long-chain alkyl amines, long-chain alkenyl alkyl amine, long-chain alkenyl alkylene amines, long-chain alkenyl amines, long-chain alkoxylated amines, long-chain alkyl alkoxylated alcohols, long-chain alkyl alkylene amines, long-chain alkyl amines, long-chain alkyl methacrylates, long-chain alkyoxylated amines, long-chain hydroxyalkyl amines, polyaryls, and polyolefin polyamines.

Fuels and fuel additives of the embodiments herein may be formulated to provide enhanced fuel properties for various applications. A fuel composition according to the present disclosure may be used for combustion for the production of power as well as stationary burners, power plants, industrial plants, home heating operations, and the like.

In one embodiment, a composition of the present disclosure may be manufactured in the United States of America or Canada.

In a further embodiment, a composition of the present disclosure may be transported to Europe by ship, air, rail, or truck.

At numerous places throughout this specification, reference has been made to a number of U.S. Patents. All such cited documents are expressly incorporated in full into this disclosure as if fully set forth herein.

Other embodiments of the present disclosure will be apparent to those skilled in the art from consideration of the specification and practice of the embodiments disclosed herein. As used throughout the specification and claims, "a" and/or "an" may refer to one or more than one. Unless otherwise indicated, all numbers expressing quantities of ingredients, properties such as molecular weight, percent, ratio, reaction conditions, and so forth used in the specification and claims are to be understood as being modified in all instances by the term "about." Accordingly, unless indicated to the contrary, the numerical parameters set forth in the specification and claims are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements. It is intended that the specification and examples be considered as exemplary only, with a true scope and spirit of the invention being indicated by the following claims.

The foregoing embodiments are susceptible to considerable variation in practice. Accordingly, the embodiments are not intended to be limited to the specific exemplifications set forth hereinabove. Rather, the foregoing embodiments are within the spirit and scope of the appended claims, including the equivalents thereof available as a matter of law.

The patentees do not intend to dedicate any disclosed embodiments to the public, and to the extent any disclosed modifications or alterations may not literally fall within the scope of the claims, they are considered to be part hereof under the doctrine of equivalents.

The invention also relates to the following numbered embodiments:

1. An environmentally compatible fuel additive composition suitable for use with a solid fuel, the additive composition comprising at least one functional component, wherein the component is selected from the group consisting of a non-persistent material, a non-bioaccumulative material, and a non-toxic material, and the additive composition is substantially devoid of any component that is persistent, bioaccumulative, and toxic.

2. The fuel additive composition of embodiment 1, wherein the functional component comprises one or more materials selected from the group consisting of: acid plume reducing agents, anti-icing agents, biocides, carrier fluids, combustion improvers, corrosion inhibitors, diluents, dust suppressants, electrostatic precipitator activating agents, fluxing agents, fouling modifiers, hygroscopic agents, ignition improvers, markers or customer-specifc "tags," reodorants, mercury scavengers, nitrogen oxide ($NO_x$) scavengers, $NO_x$ reducing agents, slag modifiers, sulfur oxide ($SO_2/SO_3$) scavengers, and surfactants.

3. The fuel additive composition of embodiment 1, wherein the non-persistent material is determined by a biodegradation test selected from the group consisting of: a dissolved organic carbon die-away test, a modified OECD screening dissolved organic carbon die-away test, a carbon dioxide evolution test, a manometric respirometry test, a closed bottle test, a MITI test, a Zahn-Wellens test, an activated sludge simulation test, an activated sludge respiration inhibition test, and a modified SCAS test.

4. The fuel additive composition of embodiment 1, wherein non-persistent material is a material having an acceptable score on a biodegradation test selected from at least one of the following:

   a) a half-life in marine water is less than 60 days;
   b) a half-life in fresh or estuarine water is less than 40 days;
   c) a half-life in marine sediment is less than 180 days;
   d) a half-life in fresh or estuarine water sediment less than 120 days; or
   e) a half-life in soil less than 120 days.

5. The fuel additive composition of embodiment 1, wherein the non-bioaccumulative material is determined by a bioconcentration factor test comprising a flow-through fish test.

6. The fuel additive composition of embodiment 5, wherein the non-bioaccumulative material has a bioconcentration factor test result below 2000.

7. The fuel additive composition of embodiment 1, wherein the non-toxic material is determined by a toxicity test selected from the group consisting of an acute toxicity for fish test, an acute toxicity for *Daphnia* test, and an algal inhibition test.

8. The fuel additive composition of embodiment 7, wherein passing the non-toxic material is devoid of a toxic effect at an aqueous concentration below 0.01 mg/L on a toxicity test.

9. The fuel additive composition of embodiment 1, wherein the at least one functional component comprises one or more of a member selected from the group consisting of: methyl cyclopentadienyl manganese tricarbonyl, cyclopentadienyl manganese tricarbonyl, octane enhancer materials, alkyl nitrates, glycols, phenates, salicylates, sulfonates, alkali detergents and alkaline earth metal-containing detergents, tall oil fatty acids, 2-ethyl hexyl nitrate, manganese carboxylates, copper carboxylates, magnesium carboxylates, magnesium sulfonates, ferrocene, calcium nitrate, perlite, aluminum trihydrate, copper oxychloride, cerium oxides, hydroxides, and carboxylates, platinum group metal organics and inorganics, aluminum silicate, magnesium silicate, vermiculite, aluminum sulfonate, aluminum carboxylate, magnesium oxide, and magnesium hydroxide.

10. The fuel additive composition of embodiment 1, wherein the at least one functional component comprises one or more metal-containing compounds selected from the group consisting of: sodium compounds, potassium compounds, magnesium compounds, calcium compounds, barium compounds, strontium compounds, titanium compounds, cerium compounds, chromium compounds, molybdenum compounds, manganese compounds, iron compounds, zinc compounds, yttrium compounds, lanthanum compounds, zirconium compounds, ruthenium compounds, tungsten compounds, rhenium compounds, osmium compounds, iridium compounds, boron compounds, aluminum compounds, silicon compounds, tin compounds, rubidium compounds, cobalt compounds, rhodium compounds, nickel compounds, palladium compounds, platinum compounds, copper compounds, silver compounds, inorganic fluoride compounds, inorganic chloride compounds, inorganic bromide compounds, inorganic iodide compounds, inorganic oxide compounds, inorganic nitrate compounds, inorganic sulfate compounds, inorganic phosphate compounds, inorganic carbonate compounds, inorganic hydride compounds, inorganic nitride compounds, organometallic alcohol compounds, organometallic aldehyde compounds, organometallic ketone compounds, organometallic ester compounds, organometallic anhydride compounds, organometallic sulfonate compounds, organometallic phosphonate compounds, organometallic chelate compounds, organometallic phenate compounds, organometallic crown ether compounds, organometallic carboxylic acid compounds, organometallic amide compounds, organometallic compounds containing one or more carbonyl groups, ethers, or poly ethers, aminos, alkylaminos, acetamidos, alkoxides, alkyls, cyanos, furfuryls, carboxylates, acetylacetonates, and other organic ligands able to coordinate with or bond with a metal, metal compound, or metal ion, and mixtures thereof.

11. The fuel additive composition of embodiment 2, wherein the combustion improver is selected from the group consisting of: sodium compounds, potassium compounds, magnesium compounds, calcium compounds, barium compounds, strontium compounds, titanium compounds, cerium compounds, chromium compounds, molybdenum compounds, manganese compounds, iron compounds, rubidium compounds, cobalt compounds, rhodium compounds, nickel compounds, palladium compounds, platinum compounds, copper compounds, silver compounds, inorganic fluoride compounds, inorganic chloride compounds, inorganic bromide compounds, inorganic iodide compounds, inorganic oxide compounds, inorganic nitrate compounds, inorganic sulfate compounds, inorganic phosphate compounds, inorganic carbonate compounds, inorganic hydride compounds, inorganic nitride compounds, organometallic alcohol compounds, organometallic aldehyde compounds, organometallic ketone compounds, organometallic ester compounds, organometallic anhydride compounds, organometallic sulfonate compounds, organometallic phosphonate compounds, organometallic chelate compounds, organometallic phenate compounds, organometallic crown ether compounds, organometallic carboxylic acid compounds, organometallic amide compounds, organometallic compounds containing one or more carbonyl groups, ethers, or poly ethers, and other organic ligands able to coordinate with or bond with a metal, metal compound, or metal ion, and mixtures thereof.

12. The fuel additive composition of embodiment 2, wherein the slag modifier is selected from the group consisting of: magnesium compounds, calcium compounds, strontium compounds, titanium compounds, manganese compounds, aluminum compounds, silicon compounds, iron compounds, copper compounds, inorganic fluoride compounds, inorganic chloride compounds, inorganic bromide compounds, inorganic iodide compounds, inorganic oxide compounds, inorganic nitrate compounds, inorganic sulfate compounds, inorganic phosphate compounds, inorganic carbonate compounds, inorganic hydride compounds, inorganic nitride compounds, organometallic alcohol compounds, organometallic aldehyde compounds, organometallic ketone compounds, organometallic ester compounds, organometallic anhydride compounds, organometallic sulfonate compounds, organometallic phosphonate compounds, organometallic chelate compounds, organometallic phenate compounds, organometallic crown ether compounds, organometallic carboxylic acid compounds, organometallic amide compounds, organometallic compounds containing one or more carbonyl groups, ethers or poly ethers, and other organic ligands able to coordinate with or bond with a metal, metal compound, or metal ion, vermiculite, perlite, and mixtures thereof.

13. The fuel additive composition of embodiment 2, wherein the fouling modifier is selected form the group consisting of: magnesium compounds, calcium compounds, manganese compounds, aluminum compounds, copper compounds, inorganic fluoride compounds, inorganic chloride compounds, inorganic bromide compounds, inorganic iodide compounds, inorganic oxide compounds, inorganic nitrate compounds, inorganic sulfate compounds, inorganic phosphate compounds, inorganic carbonate compounds, inorganic hydride compounds, inorganic nitride compounds, organometallic alcohol compounds, organometallic aldehyde compounds, organometallic ketone compounds, organometallic ester compounds, organometallic anhydride compounds, organometallic sulfonate compounds, organometallic phosphonate compounds, organometallic chelate compounds, organometallic phenate compounds, organometallic crown ether compounds, organometallic carboxylic acid compounds, organometallic amide compounds, organometallic compounds containing one or more carbonyl groups, ethers or poly ethers, and other organic ligands able to coordinate with or bond with a metal, metal compound, or metal ion, vermiculite, perlite, and mixtures thereof.

14. The fuel additive composition of embodiment 2, wherein the fluxing agent is selected from the group consisting of one or more individual compounds of iron, sodium, and potassium.

15. The fuel additive composition of embodiment 2, wherein the anti-icing agent is selected from the group comprising ether polymers, glycols, and alcohols.

16. The fuel additive composition of embodiment 2, wherein the hygroscopic agent is selected from the group consisting of: glycerin, glycerol, urea, ethanol, methanol, concentrated sulfuric acid, magnesium oxides, magnesium sulfate, magnesium sulfonate, calcium carbonate, calcium silicates, silica gel, activated alumina, zeolites, montmorillonite clay, and concentrated sodium hydroxide.

17. The fuel additive composition of embodiment 2, wherein the corrosion inhibitor is selected from the group consisting of magnesium oxide and magnesium hydroxide, and mixtures and solutions thereof.

18. The fuel additive composition of embodiment 2, wherein the corrosion inhibitor is selected from the multimetallic compounds and minerals including vermiculite and perlite.

19. The fuel additive composition of embodiment 2, wherein the solid fuel comprises one or more of the group selected from: coal, coke, coke breeze, carbonaceous char, petroleum pitch, petroleum coke, refuse derived fuel (RDF), municipal solid waste (MSW), biomass, bagasse, wood, wood pellets, wood bark, wood by-products, wood wastes, sawdust, hog fuel, black liquor solids, waste tires, charcoal, peat, corn, corn cobs, wheat, rye, and other grains, coffee grounds, and tobacco wastes.

20. An environmentally compatible solid fuel composition, comprising:

a) a major amount of a solid fuel; and
b) a minor amount of an additive composition, comprising at least one of a functional component, wherein the component comprises at least one of:

i) an acceptable level biodegradation of at least one of:

1) a half-life in marine water of less than 60 days;
2) a half-life in fresh or estuarine water of less than 40 days;
3) a half-life in marine sediment of less than 180 days;
4) a half-life in fresh or estuarine water sediment less than 120 days; or
5) a half-life in soil less than 120 days,

as determined by a biodegradation test;
ii) a bioconcentration factor below 2000 in a bioconcentration factor test; or
iii) is devoid of a toxic effect at an aqueous concentration below 0.01 mg/L on a toxicity test.

21. The solid fuel composition of embodiment 20, wherein the functional component comprises at least one material selected from the group consisting of: acid plume reducing agents, anti-icing agents, biocides, carrier fluids, combustion improvers, corrosion inhibitors, diluents, dust suppressants, electrostatic precipitator activating agents, fluxing agents, fouling modifiers, hygroscopic agents, ignition improvers, markers or customer-specific "tags," reodorants, mercury scavengers, nitrogen oxide ($NO_x$) scavengers, $NO_x$ reducing agents, slag modifiers, sulfur oxide ($SO_2/SO_3$) scavengers, and surfactants.

22. The solid fuel composition of embodiment 20, wherein the solid fuel is selected from the group consisting of coal, coke, coke breeze, carbonaceous char, petroleum pitch, petroleum coke, refuse derived fuel (RDF), municipal solid waste (MSW), biomass, bagasse, wood, wood pellets, wood bark, wood by-products, wood wastes, sawdust, hog fuel, black liquor solids, waste tires, charcoal, peat, corn, corn cobs, wheat, rye, and other grains, coffee grounds, and tobacco wastes.

23. A method of making an environmentally compatible solid fuel composition, comprising combining a major amount of a solid fuel and a minor amount of an additive composition, wherein the additive composition comprises at least one functional component wherein the component is selected from:

> i) a material having an acceptable level biodegradation of at least one of:

>> 1) a half-life in marine water of less than 60 days;
>> 2) a half-life in fresh or estuarine water of less than 40 days;
>> 3) a half-life in marine sediment of less than 180 days;
>> 4) a half-life in fresh or estuarine water sediment less than 120 days; or
>> 5) a half-life in soil less than 120 days,

> as determined by a biodegradation test;
> ii) a material having a bioconcentration factor below 2000 in a bioconcentration factor test; or
> iii) a material that is devoid of a toxic effect at an aqueous concentration below 0.01 mg/L on a toxicity test, and

wherein the solid fuel composition complies with European Council Directive 67/548/EEC.

24. The method of embodiment 23, wherein the functional component further comprises a material selected from the group consisting of: acid plume reducing agents, anti-icing agents, biocides, carrier fluids, combustion improvers, corrosion inhibitors, diluents, dust suppressants, electrostatic precipitator activating agents, fluxing agents, fouling modifiers, hygroscopic agents, ignition improvers, markers or customer-specific "tags," reodorants, mercury scavengers, nitrogen oxide ($NO_x$) scavengers, $NO_x$ reducing agents, slag modifiers, sulfur oxide ($SO_2/SO_3$) scavengers, and surfactants.

25. An environmentally compatible solid fuel composition comprising:

> a) a major amount of a solid fuel; and
> b) a minor amount of an additive composition comprising at least one functional component, wherein the component is at least selected from the group consisting of non-persistent materials, non-bioaccumulative materials, and non-toxic materials, and the additive composition is substantially devoid of any component that is persistent, bioaccumulative, and toxic.

**Claims**

1. An environmentally compatible fuel additive composition suitable for use with a solid fuel, the additive composition comprising at least one functional component, wherein the component is selected from the group consisting of a non-persistent material, a non-bioaccumulative material, and a non-toxic material, and the additive composition is substantially devoid of any component that is persistent, bioaccumulative, and toxic.

2. The fuel additive composition of claim 1, wherein the functional component comprises one or more materials selected from the group consisting of: acid plume reducing agents, anti-icing agents, biocides, carrier fluids, combustion improvers, corrosion inhibitors, diluents, dust suppressants, electrostatic precipitator activating agents, fluxing agents, fouling modifiers, hygroscopic agents, ignition improvers, markers or customer-specific "tags," reodorants, mercury scavengers, nitrogen oxide ($NO_x$) scavengers, $NO_x$ reducing agents, slag modifiers, sulfur oxide ($SO_2/SO_3$) scavengers, and surfactants.

3. The fuel additive composition of claim 1 or 2, wherein the non-persistent material is determined by a biodegradation test selected from the group consisting of: a dissolved organic carbon die-away test, a modified OECD screening dissolved organic carbon die-away test, a carbon dioxide evolution test, a manometric respirometry test, a closed bottle test, a MITI test, a Zahn-Wellens test, an activated sludge simulation test, an activated sludge respiration inhibition test, and a modified SCAS test.

4. The fuel additive composition of any one of claims 1 to 3, wherein the non-persistent material is a material having an acceptable score on a biodegradation test selected from at least one of the following:

   a) a half-life in marine water is less than 60 days;
   b) a half-life in fresh or estuarine water is less than 40 days;
   c) a half-life in marine sediment is less than 180 days;
   d) a half-life in fresh or estuarine water sediment less than 120 days; or
   e) a half-life in soil less than 120 days.

5. The fuel additive composition of any one of claims 1 to 4, wherein the non-bioaccumulative material is determined by a bioconcentration factor test comprising a flow-through fish test, wherein the non-bioaccumulative material preferably has a bioconcentration factor test result below 2000.

6. The fuel additive composition of any one of claims 1 to 5, wherein the non-toxic material is determined by a toxicity test selected from the group consisting of an acute toxicity for fish test, an acute toxicity for *Daphnia* test, and an algal inhibition test, wherein the passing non-toxic material is preferably devoid of a toxic effect at an aqueous concentration below 0.01 mg/L on a toxicity test.

7. The fuel additive composition of any one of claims 1 to 6, wherein the at least one functional component comprises one or more of a member selected from the group consisting of: methyl cyclopentadienyl manganese tricarbonyl, cyclopentadienyl manganese tricarbonyl, octane enhancer materials, alkyl nitrates, glycols, phenates, salicylates, sulfonates, alkali detergents and alkaline earth metal-containing detergents, tall oil fatty acids, 2-ethyl hexyl nitrate, manganese carboxylates, copper carboxylates, magnesium carboxylates, magnesium sulfonates, ferrocene, calcium nitrate, perlite, aluminum trihydrate, copper oxychloride, cerium, oxides, hydroxides, and carboxylates, platinum group metal organics and inorganics, aluminum silicate, magnesium silicate, vermiculite, aluminum sulfonate, aluminum carboxylate, magnesium oxide, and magnesium hydroxide.

8. The fuel additive composition of any one of claims 1 to 7, wherein the at least one functional component comprises one or more metal-containing compounds selected from the group consisting of: sodium compounds, potassium compounds, magnesium compounds, calcium compounds, barium compounds, strontium compounds, titanium compounds, cerium compounds, chromium compounds, molybdenum compounds, manganese compounds, iron compounds, zinc compounds, yttrium compounds, lanthanum compounds, zirconium compounds, ruthenium compounds, tungsten compounds, rhenium compounds, osmium compounds, iridium compounds, boron compounds, aluminum compounds, silicon compounds, tin compounds, rubidium compounds, cobalt compounds, rhodium compounds, nickel compounds, palladium compounds, platinum compounds, copper compounds, silver compounds, inorganic fluoride compounds, inorganic chloride compounds, inorganic bromide compounds, inorganic iodide compounds, inorganic oxide compounds, inorganic nitrate compounds, inorganic sulfate compounds, inorganic phosphate compounds, inorganic carbonate compounds, inorganic hydride compounds, inorganic nitride compounds, organometallic alcohol compounds, organometallic aldehyde compounds, organometallic ketone compounds, organometallic ester compounds, organometallic anhydride compounds, organometallic sulfonate compounds, organometallic phosphonate compounds, organometallic chelate compounds, organometallic phenate compounds, organometallic crown ether compounds, organometallic carboxylic acid compounds, organometallic amide compounds, organometallic compounds containing one or more carbonyl groups, ethers, or poly ethers, aminos, alkylaminos, acetamidos, alkoxides, alkyls, cyanos, furfuryls, carboxylates, acetylacetonates, and other organic ligands able to coordinate with or bond with a metal, metal compound, or metal ion, and mixtures thereof.

9. The fuel additive composition of any one of claims 2 to 8, wherein the combustion improver is selected from the group consisting of: sodium compounds, potassium compounds, magnesium compounds, calcium compounds, barium compounds, strontium compounds, titanium compounds, cerium compounds, chromium compounds, molybdenum compounds, manganese compounds, iron compounds, rubidium compounds, cobalt compounds, rhodium compounds, nickel compounds, palladium compounds, platinum compounds, copper compounds, silver compounds, inorganic fluoride compounds, inorganic chloride compounds, inorganic bromide compounds, inorganic iodide compounds, inorganic oxide compounds, inorganic nitrate compounds, inorganic sulfate compounds, inorganic phosphate compounds, inorganic carbonate compounds, inorganic hydride compounds, inorganic nitride compounds, organometallic alcohol compounds, organometallic aldehyde compounds, organometallic ketone compounds, organometallic ester compounds, organometallic anhydride compounds, organometallic sulfonate compounds, organometallic phosphonate compounds, organometallic chelate compounds, organometallic phenate compounds, organometallic crown ether compounds, organometallic carboxylic acid compounds, organometallic amide compounds, organometallic compounds containing one or more carbonyl groups, ethers, or poly ethers, and other organic ligands able to coordinate with or bond with a metal, metal compound, or metal ion, and mixtures thereof.

**10.** The fuel additive composition of any one of claims 2 to 9, wherein the slag modifier is selected from the group consisting of: magnesium compounds, calcium compounds, strontium compounds, titanium compounds, manganese compounds, aluminum compounds, silicon compounds, iron compounds, copper compounds, inorganic fluoride compounds, inorganic chloride compounds, inorganic bromide compounds, inorganic iodide compounds, inorganic oxide compounds, inorganic nitrate compounds, inorganic sulfate compounds, inorganic phosphate compounds, inorganic carbonate compounds, inorganic hydride compounds, inorganic nitride compounds, organometallic alcohol compounds, organometallic aldehyde compounds, organometallic ketone compounds, organometallic ester compounds, organometallic anhydride compounds, organometallic sulfonate compounds, organometallic phosphonate compounds, organometallic chelate compounds, organometallic phenate compounds, organometallic crown ether compounds, organometallic carboxylic acid compounds, organometallic amide compounds, organometallic compounds containing one or more carbonyl groups, ethers or poly ethers, and other organic ligands able to coordinate with or bond with a metal, metal compound, or metal ion, vermiculite, perlite, and mixtures thereof.

**11.** The fuel additive composition of any one of claims 2 to 10, wherein the fouling modifier is selected form the group consisting of: magnesium compounds, calcium compounds, manganese compounds, aluminum compounds, copper compounds, inorganic fluoride compounds, inorganic chloride compounds, inorganic bromide compounds, inorganic iodide compounds, inorganic oxide compounds, inorganic nitrate compounds, inorganic sulfate compounds, inorganic phosphate compounds, inorganic carbonate compounds, inorganic hydride compounds, inorganic nitride compounds, organometallic alcohol compounds, organometallic aldehyde compounds, organometallic ketone compounds, organometallic ester compounds, organometallic anhydride compounds, organometallic sulfonate compounds, organometallic phosphonate compounds, organometallic chelate compounds, organometallic phenate compounds, organometallic crown ether compounds, organometallic carboxylic acid compounds, organometallic amide compounds, organometallic compounds containing one or more carbonyl groups, ethers or poly ethers, and other organic ligands able to coordinate with or bond with a metal, metal compound, or metal ion, vermiculite, perlite, and mixtures
thereof;
and/or
wherein the fluxing agent is selected from the group consisting of one or more individual compounds of iron, sodium, and potassium;
and/or
wherein the anti-icing agent is selected from the group comprising ether polymers, glycols, and alcohols;
and/or
wherein the hygroscopic agent is selected from the group consisting of: glycerin, glycerol, urea, ethanol, methanol, concentrated sulfuric acid, magnesium oxides, magnesium sulfate, magnesium sulfonate, calcium carbonate, calcium silicates, silica gel, activated alumina, zeolites, montmorillonite clay, and concentrated sodium hydroxide;
and/or
wherein the corrosion inhibitor is selected from the group consisting of magnesium oxide, magnesium hydroxide, mixtures and solutions thereof, multimetallic compounds and minerals including vermiculite and perlite.

**12.** The fuel additive composition according to any one of claims 2 to 11, wherein the solid fuel comprises one or more of the group selected from: coal, coke, coke breeze, carbonaceous char, petroleum pitch, petroleum coke, refuse derived fuel (RDF), municipal solid waste (MSW), biomass, bagasse, wood, wood pellets, wood bark, wood by-products, wood wastes, sawdust, hog fuel, black liquor solids, waste tires, charcoal, peat, corn, corn cobs, wheat, rye, and other grains, coffee grounds, and tobacco wastes.

**13.** An environmentally compatible solid fuel composition, comprising:

a) a major amount of a solid fuel; and

b) a minor amount of an additive composition according to any one of claims 1 to 12.

14. A method of making an environmentally compatible solid fuel composition, comprising combining a major amount of a solid fuel and a minor amount of an additive composition according to any one of claims 1 to 12.

15. An environmentally compatible solid fuel composition comprising:

a) a major amount of a solid fuel; and

b) a minor amount of an additive composition according to any one of claims 1 to 12, comprising at least one functional component, wherein the component is at least selected from the group consisting of non-persistent materials, non-bioaccumulative materials, and non-toxic materials, and the additive composition is substantially devoid of any component that is persistent, bioaccumulative, and toxic.

**PARTIAL EUROPEAN SEARCH REPORT**    Application Number

Europäisches
Patentamt
European
Patent Office
Office européen
des brevets

which under Rule 63 of the European Patent Convention EP 08 16 3571
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/50220 A (VE GRUPPEN AS [DK]; POULSEN MOGENS [DK]) 27 June 2002 (2002-06-27) * page 1, line 18 - line 29; claims 1,9,10 * | 1-5, 12-15 | INV. C10L9/10 C10L1/10 C10L5/00 |
| X | WO 2005/010132 A (BONNELLRICKARD CARLA [CA]; RICKARD HARRY J [CA]) 3 February 2005 (2005-02-03) * page 8, line 10 - page 9, line 14; claims 1-7 * * page 15, line 1 - page 18, line 15; tables 1-5 * | 1-5, 12-15 | |
| X | EP 0 912 662 B (PO HANG IRON & STEEL [KR]; RES INST IND SCIENCE & TECH [KR]; VOEST ALP) 6 November 2002 (2002-11-06) * claims 1,4 * | 1,2,6-15 | |
| X | EP 1 498 470 A (ETHYL PETROLEUM ADDITIVES INC [US]) 19 January 2005 (2005-01-19) * claims 1-6 * | 1,2,6-15 | |
|  | -/-- | | |

TECHNICAL FIELDS
SEARCHED      (IPC)

C10L

## INCOMPLETE SEARCH

The Search Division considers that the present application, or one or more of its claims, does/do
not comply with the EPC to such an extent that a meaningful search into the state of the art cannot
be carried out, or can only be carried out partially, for these claims.

Claims searched completely :

Claims searched incompletely :

Claims not searched :

Reason for the limitation of the search:

   see sheet C

| Place of search | Date of completion of the search | Examiner |
|---|---|---|
| Munich | 7 January 2009 | Pöllmann, Klaus |

EPO FORM 1503 03.82 (P04E07)

Europäisches
Patentamt

European
Patent Office

Office européen
des brevets

## PARTIAL EUROPEAN SEARCH REPORT

Application Number

EP 08 16 3571

| DOCUMENTS CONSIDERED TO BE RELEVANT | | | CLASSIFICATION OF THE APPLICATION (IPC) |
|---|---|---|---|
| Category | Citation of document with indication, where appropriate, of relevant passages | Relevant to claim | |
| X | US 3 692 503 A (KUKIN IRA) 19 September 1972 (1972-09-19) * abstract; claims 1,2,5,10; examples 23,25 * ----- | 1,2,6-15 | |
| | | | **TECHNICAL FIELDS SEARCHED** (IPC) |

EPO FORM 1503 03.82 (P04C10)

Europäisches
Patentamt

European
Patent Office

Office européen
des brevets

**INCOMPLETE SEARCH
SHEET C**

Application Number

EP 08 16 3571

Claim(s) searched incompletely:
      1-15

Claim(s) not searched:
      -

Reason for the limitation of the search:

The claims 1-6 encompass compounds defined only by their desired function, contrary to the requirements of clarity of Article 84 EPC, because the result-to-be-achieved type of definition does not allow the scope of the claim to be ascertained. The fact that any compound could be screened does not overcome this objection, as the skilled person would not have knowledge beforehand as to whether it would fall within the scope claimed. Undue experimentation would be required to screen compounds randomly. This non-compliance with the substantive provisions is to such an extent, that a meaningful search of the whole claimed subject-matter of the claims could not be carried out (Rule 63 EPC).

The claim 7-11 relates to an extremely large number of possible compounds. Support and disclosure in the sense of Article 84 and 83 EPC is not to be found however for the compounds claimed. The non-compliance with the substantive provisions is to such an extent, that a meaningful search of the whole claimed subject-matter of the claim could not be carried out (Rule 63 EPC and Guidelines B-VIII, 3).
The aforementioned is also true for claims 12-15 referring to claims 1-11. Consequently the search was restricted to specific non-persistent (e.g. vegetable oils) or non-toxic materials (calcium, magnesium or manganese compounds).

**ANNEX TO THE EUROPEAN SEARCH REPORT
ON EUROPEAN PATENT APPLICATION NO.**                    EP 08 16 3571

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2009

| Patent document cited in search report | | Publication date | Patent family member(s) | | Publication date |
|---|---|---|---|---|---|
| WO 0250220 | A | 27-06-2002 | AU | 1587902 A | 01-07-2002 |
| WO 2005010132 | A | 03-02-2005 | CA | 2474404 A1 | 24-01-2005 |
| EP 0912662 | B | 06-11-2002 | AT | 227330 T | 15-11-2002 |
| | | | AU | 710567 B2 | 23-09-1999 |
| | | | AU | 5414098 A | 17-07-1998 |
| | | | BR | 9707579 A | 27-07-1999 |
| | | | CA | 2246392 A1 | 02-07-1998 |
| | | | DE | 69716918 D1 | 12-12-2002 |
| | | | DE | 69716918 T2 | 17-07-2003 |
| | | | EP | 0912662 A1 | 06-05-1999 |
| | | | JP | 3041386 B2 | 15-05-2000 |
| | | | JP | 11504385 T | 20-04-1999 |
| | | | WO | 9828385 A1 | 02-07-1998 |
| | | | RU | 2144060 C1 | 10-01-2000 |
| | | | US | 6203848 B1 | 20-03-2001 |
| EP 1498470 | A | 19-01-2005 | AR | 047211 A1 | 11-01-2006 |
| | | | AU | 2004202530 A1 | 03-02-2005 |
| | | | BR | 0402723 A | 14-06-2005 |
| | | | CA | 2470041 A1 | 18-01-2005 |
| | | | CN | 1576356 A | 09-02-2005 |
| | | | JP | 2005043043 A | 17-02-2005 |
| | | | KR | 20050009239 A | 24-01-2005 |
| | | | MX | PA04006612 A | 31-03-2005 |
| | | | RU | 2265043 C1 | 27-11-2005 |
| | | | SG | 115711 A1 | 28-10-2005 |
| | | | US | 2005011413 A1 | 20-01-2005 |
| | | | ZA | 200404389 A | 24-01-2005 |
| US 3692503 | A | 19-09-1972 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050257724 A1
- US 11743707 B
- US 20040118032 A
- US 7094274 B